# FASCICULE DE BREVET EUROPEEN

(11) **EP 2 753 831 B1**
(45) Date de publication et mention de la délivrance du brevet: **02.05.2018**
(21) Numéro de dépôt: 12750476.9
(22) Date de dépôt: 03.08.2012
(51) Int. Cl.: F03H 1/00, B64G 1/40, B64G 1/42

(54) **SYSTEME DE PROPULSION ELECTRIQUE A PROPULSEURS A PLASMA STATIONNAIRE**
ELEKTRISCHES ANTRIEBSSYSTEM MIT STATIONÄREN PLASMATRIEBWERKEN
ELECTRIC PROPULSION SYSTEM WITH STATIONARY PLASMA THRUSTERS

(30) Priorité: 09.09.2011 FR 1158047
(43) Date de publication de la demande: 16.07.2014
(73) Titulaire: Snecma, 75015 Paris (FR)
(72) Inventeur: LORAND, Anthony Claude Bernard, F-27940 Notre Dame De L'isle (FR)
(74) Mandataire: Desormiere, Pierre-Louis
(86) Numéro de dépôt international: PCT/FR2012/051845
(87) Numéro de publication internationale: WO 2013/034825

(56) Documents cités:
- EP-A1- 0 550 250
- FR-A1- 2 788 084
- US-A- 5 947 421
- Olivier Duchemin ET AL: "Multi-Channel Hall-Effect Thrusters: Mission Applications and Architecture Trade-Offs", Paper IEPC-2007-227; 30th International Electric Propulsion Conference, Florence, Italy September 17-20, 2007, 17 septembre 2007 (2007-09-17), pages 1-15, XP055026701, Extrait de l'Internet: URL:http://erps.spacegrant.org/uploads/ima ges/images/iepc_articledownload_1988-2007/ 2007index/IEPC-2007-227.pdf [extrait le 2012-05-09]

## Description

### Domaine de l'invention

La présente invention concerne un système de propulsion électrique à propulseurs à plasma stationnaire, encore appelés propulseurs à effet Hall.

### Art antérieur

Les systèmes de propulsion électrique sont généralement utilisés pour équiper des satellites, notamment des satellites géostationnaires, et permettent en particulier de réaliser un contrôle d'orbite. Des propulseurs électriques peuvent également servir à effectuer des manoeuvres de transfert d'orbite.

Pour des questions de fiabilité, un système de propulsion électrique comprend des équipements redondants. Toutefois, le coût élevé des propulseurs à plasma stationnaire est un frein à leur développement comme équipement de satellites.

Il existe donc un besoin de simplification de l'architecture de tels systèmes de propulsion électrique, et de réduction de la masse, tout en maintenant un niveau satisfaisant de redondance et de fiabilité et en restant compatible avec les interfaces existantes avec les satellites devant être équipés de tels systèmes de propulsion.

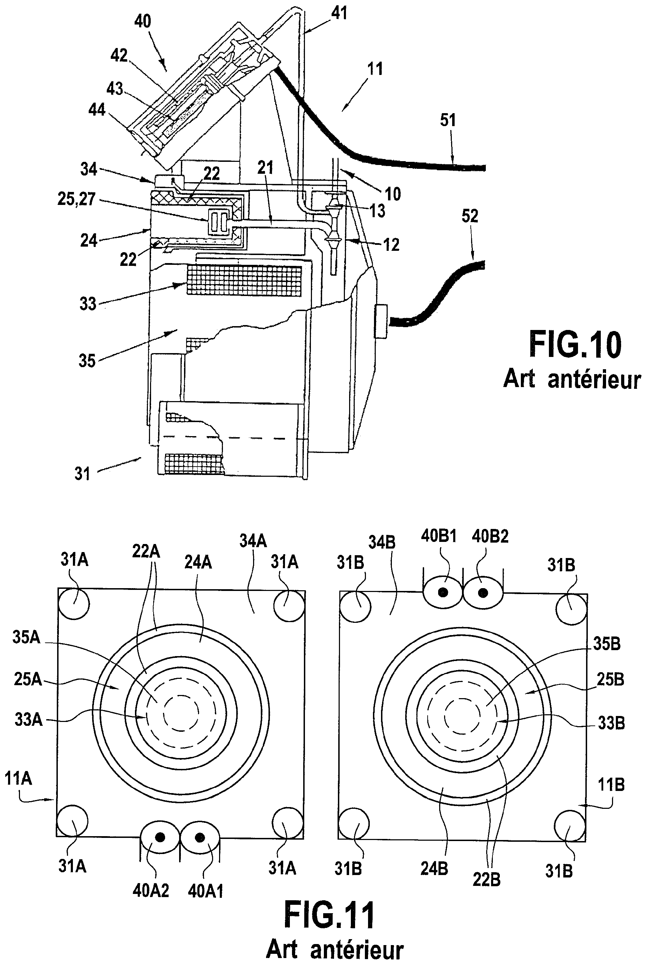

On rappellera en référence à la figure 10 la structure de base d'un propulseur à effet Hall 11 qui comprend essentiellement un canal d'ionisation et de décharge 24 auquel est associée une anode 25, et une cathode 40 disposée au voisinage de la sortie du canal d'ionisation et de décharge 24. Le canal d'ionisation et de décharge 24 comprend des parois 22 réalisées en matériau isolant tel que de la céramique. Un circuit magnétique 34 et des bobines d'électro-aimant 31 entourent le canal d'ionisation et de décharge 24. Un gaz neutre tel que du xénon provenant d'une canalisation 10 reliée à un réservoir non représenté est injecté par une canalisation 21 à l'arrière du canal de décharge 24 dans un distributeur de gaz 27 combiné à l'anode 25 et par une canalisation 41 dans la cathode 40. Le gaz neutre est ionisé dans le canal d'ionisation et de décharge 24 par collision avec les électrons émis par la cathode 40. Les ions produits sont accélérés et éjectés par le champ électrique axial créé entre l'anode 25 et la cathode 40. Le circuit magnétique 34 et les bobines d'électro-aimant 31 créent au sein du canal 24 un champ magnétique qui est essentiellement radial.

La figure 10 représente une vue schématique en coupe axiale d'un exemple de propulseur à effet Hall du type à dérive fermée d'électrons.

Sur la figure 10, on voit un canal annulaire 24 défini par une pièce 22 en matériau isolant, telle qu'une céramique diélectrique, un circuit magnétique comprenant des pièces annulaires externe 34 et interne 35, une culasse magnétique disposée à l'amont du propulseur et un noyau central reliant les pièces annulaires 34, 35 et la culasse magnétique. Des bobines externes 31 et interne 33 permettent de créer un champ magnétique dans le canal annulaire 24. Une cathode creuse 40 est couplée à un dispositif d'alimentation en xénon pour former un nuage de plasma devant la sortie aval du canal 24. Une anode 25 est disposée dans le canal annulaire 24 et est associée à un distributeur annulaire 27 de gaz ionisable (xénon). Un boîtier peut protéger l'ensemble du propulseur. La cathode 40 peut comprendre des éléments de chauffage 42, d'émission 43 et d'amorçage 44. Les canalisations 10, 21, 41 d'alimentation en gaz sont équipées d'éléments 12, 13 d'isolation électrique. Des câbles électriques 51, 52 relient respectivement les éléments de la cathode 40 et l'anode 25 ainsi que les bobines 31, 33 à des circuits électriques d'alimentation et de commande non représentés sur la figure 10.

Des exemples de propulseur à effet Hall sont décrits notamment dans les documents FR 2 693 770 A1, FR 2 743 191 A1, FR 2 782 884 A1 et FR 2 788 084 A1.

Les propulseurs à effet Hall tels que ceux décrits en référence à la figure 10 peuvent comprendre une cathode unique associée à l'anode centrale et un circuit unique de commande du débit d'alimentation de la cathode en xénon. La réalisation est alors simplifiée et la masse réduite. Toutefois, il n'existe alors aucune redondance et la fiabilité n'est pas assurée en cas de défaillance de l'anode, de la cathode ou d'un circuit de commande.

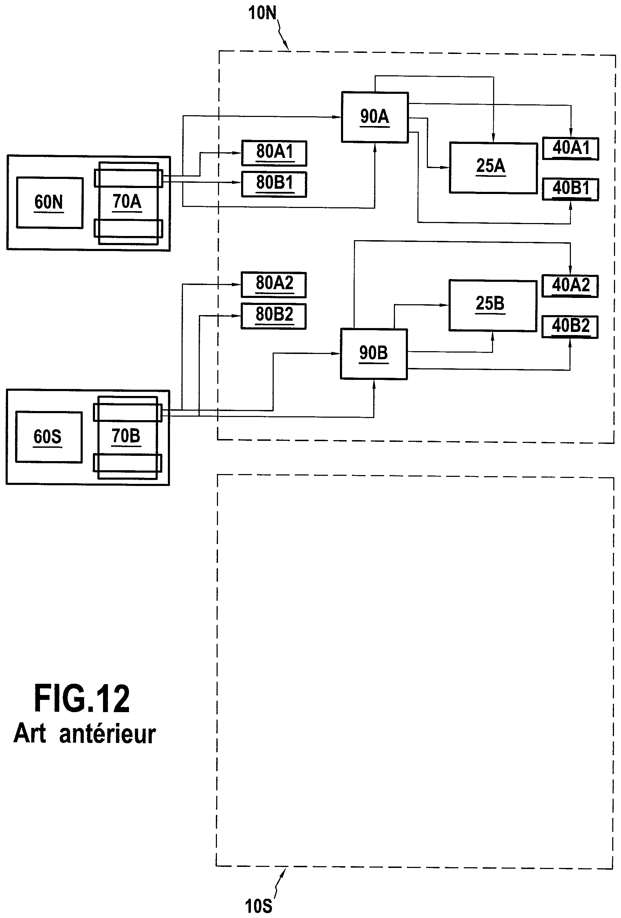

C'est pourquoi, on a proposé de réaliser des systèmes de propulsion électrique redondants avec l'utilisation de couples de propulseurs comprenant chacun deux cathodes et deux circuits de commande, comme illustré sur les figures 11 et 12.

Sur la figure 11, on a représenté en vue de face deux propulseurs à effet Hall identiques 11A, 11B qui peuvent être semblables au propulseur 11 de la figure 10 mais comportent chacun deux cathodes 40A1, 40A2 respectivement 40B1, 40B2 et deux circuits de commande du débit d'alimentation en xénon des cathodes (non représentés sur la figure 11). Sur la figure 11, les éléments constitutifs de chaque propulseur 11A, 11B portent les mêmes références que sur la figure 10, mais suivies de la lettre A pour le propulseur 11A et de la lettre B pour le propulseur 11B. Ces éléments constitutifs ne seront donc pas décrits à nouveau.

La figure 12 représente un schéma-bloc des circuits de commande du couple de propulseurs 11A, 11B de la figure 11, qui à titre d'exemple sont considérés comme constituant la voie nord dans un ensemble de deux couples de propulseurs de contrôle d'orbite nord-sud.

La figure 12 montre un module 60N de conversion de puissance (ou PPU) destiné en premier lieu à la voie nord, auquel est associé un module 70A de commutation de propulseur (ou ETSU). La voie nord du module 70A de commutation de propulseur est reliée d'une part à chacun des circuits de commande du débit d'alimentation de xénon 80A1, 80B1 associés aux cathodes normales 40A1, 40B1 des premier et deuxième propulseurs 11A, 11B, et d'autre part à une unité de filtrage électrique 90A servant à alimenter en énergie électrique d'une part l'anode 25A et d'autre part les première et deuxième cathodes 40A1, 40B1 du premier propulseur 11A de la voie nord. Un deuxième module 60S de conversion de puissance (ou PPU) est destiné en premier lieu à la voie sud, et est associé à un deuxième module 70B de commutation de propulseur (ou ETSU). La voie nord du module 70B de commutation de propulseur est reliée d'une part à chacun des circuits de commande du débit d'alimentation de xénon 80A2, 80B2 associés aux cathodes redondantes 40A2, 40B2 des premier et deuxième propulseurs 11A, 11B, et d'autre part à une unité de filtrage électrique 90B servant à alimenter en énergie électrique d'une part l'anode 25B et d'autre part les première et deuxième cathodes 40A2, 40B2 du deuxième propulseur 11B de la voie nord. Les premier et deuxième modules de traitement de puissance 60N, 60S, la voie nord des premier et deuxième modules 70A, 70B de commutation de propulseur et l'ensemble 10N des éléments décrits ci-dessus constituent un ensemble entièrement redondant pour les propulseurs 11A, 11B de la voie nord, tous les éléments étant dupliqués. De façon similaire, les premier et deuxième modules de traitement de puissance 60N, 60S, la voie sud des premier et deuxième modules 70A, 70B de commutation de propulseur et un ensemble 10S d'éléments semblables aux éléments décrits ci-dessus et qui ne seront pas décrits à nouveau constituent un ensemble entièrement redondant pour les propulseurs 11A, 11B de la voie sud, tous les éléments étant dupliqués.

Bien que le système décrit en référence aux figures 11 et 12 assure une redondance complète et donc une grande fiabilité, ce système est coûteux, lourd et ne permet pas de simplification de l'architecture du système. Par ailleurs, il est à noter que dans le cas des propulseurs à plasma stationnaire, le circuit de décharge que l'on qualifie d'anode, est lié au circuit d'extraction et de neutralisation des ions que l'on qualifie de cathode, de sorte qu'il apparaît a priori difficile de simplifier une architecture telle que celle du système connu des figures 11 et 12.

L'article "Multi-Channel Hall-Effect Thrusters: Mission Applications and Architecture Trade-Offs" de Duchemin et al, IEPC-2007-227, XP055026701, décrit un système de propulsion électrique comprenant deux propulseurs, chaque propulseur ayant 4 canaux et 2 cathodes redondantes.

### Objet et description succincte de l'invention

La présente invention a pour but de remédier aux inconvénients précités des systèmes de propulsion électrique connus mettant en oeuvre des propulseurs à effet Hall, ou propulseurs à plasma à dérive fermée d'électrons, afin de simplifier l'architecture de ces systèmes et réduire leur coût tout en conservant une fiabilité en cas de défaillance de l'un des composants du système.

Ces buts sont atteints grâce à un système de propulsion électrique à propulseurs à plasma stationnaire, comprenant au moins un dispositif de fourniture de gaz sous haute pression régulé ; des première et deuxième unités d'alimentation électrique ; des première et deuxième unités de commutation ; des premier et deuxième filtres électriques, et des premier et deuxième propulseurs à plasma stationnaire juxtaposés, le premier propulseur à plasma stationnaire comprenant un premier canal d'ionisation, une première cathode unique disposée au voisinage de la sortie du premier canal d'ionisation, une première anode associée au premier canal d'ionisation, un premier distributeur de gaz et des premiers dispositifs de création d'un champ magnétique autour du premier canal d'ionisation et le deuxième propulseur à plasma stationnaire comprenant un deuxième canal d'ionisation, une deuxième cathode unique disposée au voisinage de la sortie du deuxième canal d'ionisation, une deuxième anode associée au deuxième canal d'ionisation, un deuxième distributeur de gaz et des deuxièmes dispositifs de création d'un champ magnétique autour du deuxième canal d'ionisation,

caractérisé en ce qu'il comprend en outre un dispositif de branchement électrique commun des première et deuxième cathodes ; des premier et deuxième dispositifs de commande de débit de gaz associés respectivement à chacun des premier et deuxième propulseurs à plasma stationnaire, avec un dispositif fluidique commun d'alimentation en gaz des première et deuxième anodes et des première et deuxième cathodes à partir dudit dispositif de fourniture de gaz sous haute pression régulé et un dispositif de commande sélective de l'activation à un instant donné d'une seule desdites première et deuxième cathodes en coopération avec l'une desdites première et deuxième anodes.

Un tel système est simplifié par rapport à un système à redondance complète comportant deux cathodes pour chaque propulseur à plasma stationnaire (PPS), mais la fiabilité reste très grande du fait de la présence des deux anodes et de la possibilité pour la cathode défaillante d'un PPS d'être remplacée par la cathode de l'autre PPS, dès lors que cette coopération a été prévue par construction.

Le système selon l'invention avec un branchement électrique et fluidique commun de deux cathodes de deux PPS différents juxtaposés permet ainsi une simplification de la réalisation par rapport à un système à PPS bi-cathodes tout en assurant un fonctionnement avec des cathodes croisées d'une façon proche d'une redondance complète, dans la mesure où avec un premier PPS possédant une première anode A1 et une première cathode K1 et un deuxième PPS possédant une deuxième anode A2 et une deuxième cathode K2, on peut avoir les quatre configurations de fonctionnement suivantes qui assurent une garantie de fonctionnement, même en cas de défaut de fonctionnement de l'une ou l'autre des anodes A1 et A2 et en même temps de l'une ou l'autre des cathodes K1 et K2:
Anode A1 + Cathode K1
Anode A2 + Cathode K2
Anode A1 + Cathode K2
Anode A2 + Cathode K1

Selon un premier mode de réalisation particulier, le dispositif fluidique commun comprend une première branche avec au moins une première vanne commandée d'entrée, un premier élément de thermostriction et un premier ensemble de trois branches secondaires comprenant chacune une vanne commandée respective et reliées respectivement à ladite première cathode, à ladite première anode et à ladite deuxième cathode et une deuxième branche avec au moins une deuxième vanne commandée d'entrée, un deuxième élément de thermostriction et un deuxième ensemble de trois branches secondaires comprenant chacune une vanne commandée respective et reliées respectivement à ladite première cathode, à ladite deuxième cathode et à ladite deuxième anode.

Dans ce cas, avantageusement, le premier dispositif de commande de débit de gaz comprend des bobines pour la commande de la première vanne commandée d'entrée et des commandes sélectives des vannes commandées respectives du premier ensemble de trois branches secondaires et le deuxième dispositif de commande de débit de gaz comprend des bobines pour la commande de la deuxième vanne commandée d'entrée et des commandes sélectives des vannes commandées respectives du deuxième ensemble de trois branches secondaires.

Selon un deuxième mode de réalisation particulier, le dispositif fluidique commun comprend une première branche avec au moins une première vanne commandée d'entrée, un premier élément de thermostriction et un premier ensemble d'une première et d'une deuxième branches secondaires comprenant chacune une vanne commandée respective, la première branche secondaire étant reliée à ladite première anode et la deuxième branche secondaire étant reliée d'une part à ladite première cathode par une première vanne commandée supplémentaire et d'autre part à ladite deuxième cathode par une deuxième vanne commandée supplémentaire et une deuxième branche avec au moins une deuxième vanne commandée d'entrée, un deuxième élément de thermostriction et un deuxième ensemble d'une première et d'une deuxième branches secondaires comprenant chacune une vanne commandée respective, la première branche secondaire étant reliée à ladite deuxième anode et la deuxième branche secondaire étant reliée d'une part à ladite première cathode par ladite première vanne commandée supplémentaire et d'autre part à ladite deuxième cathode par ladite deuxième vanne commandée supplémentaire.

Dans ce cas, avantageusement, le premier dispositif de commande de débit de gaz comprend des bobines montées en parallèle pour la commande simultanée de la première vanne commandée d'entrée, de la vanne commandée de la première branche secondaire de la première branche et de la vanne de ladite deuxième branche secondaire de la première branche, le deuxième dispositif de commande de débit de gaz comprend des bobines montées en parallèle pour la commande simultanée de la deuxième vanne commandée d'entrée, de la vanne commandée de la première branche secondaire de la deuxième branche et de la vanne commandée de la deuxième branche secondaire de la deuxième branche et les premier et deuxième dispositifs de commande de débit de gaz comprennent en outre de façon commune des bobines de commande desdites première et deuxième vannes commandées supplémentaires, l'une ou l'autre desdites première et deuxième vannes commandées supplémentaires étant ouverte à un instant donné.

Selon un troisième mode de réalisation possible, le dispositif fluidique commun comprend une première branche avec au moins une première vanne commandée d'entrée, un premier élément de thermostriction et un premier ensemble de deux branches secondaires comprenant chacune une vanne commandée respective et reliées respectivement à ladite première cathode et à ladite première anode et une deuxième branche avec au moins une deuxième vanne commandée d'entrée, un deuxième élément de thermostriction et un deuxième ensemble de deux branches secondaires comprenant chacune une vanne commandée respective et reliées respectivement à ladite deuxième cathode et à ladite deuxième anode.

Dans ce cas, avantageusement le premier dispositif de commande de débit de gaz comprend des bobines pour la commande respectivement de la première vanne commandée d'entrée et des vannes commandées respectives du premier ensemble de deux branches secondaires, le deuxième dispositif de commande de débit de gaz comprend des bobines pour la commande respectivement de la deuxième vanne commandée d'entrée et des vannes commandées respectives du deuxième ensemble de deux branches secondaires et les premier et deuxième dispositifs de commande de débit de gaz sont associés à un boîtier de commutation pour assurer la commande sélective de l'alimentation desdites bobines.

Au moins un filtre peut être associé à chaque vanne commandée.

Le système selon l'invention peut en outre comprendre des troisième et quatrième propulseurs à plasma stationnaire juxtaposés analogues auxdits premier et deuxième propulseurs à plasma stationnaire juxtaposés et coopérant avec lesdits au moins un dispositif de fourniture de gaz sous haute pression régulé, lesdites première et deuxième unités d'alimentation électrique, lesdites première et deuxième unités de commutation et lesdits premier et deuxième filtres électriques.

Il est ainsi possible par exemple d'assurer un contrôle Nord-Sud d'un satellite avec une fiabilité remarquable tout en disposant d'une architecture simplifiée et moins coûteuse que celle d'un ensemble de quatre propulseurs à plasma stationnaire bi-cathodes.

### Brève description des dessins

D'autres caractéristiques et avantages de l'invention ressortiront de la description suivante de modes particuliers de réalisation, donnés à titre d'exemples non limitatifs en référence aux dessins annexés, sur lesquels :
- la figure 1 est une vue de face d'un ensemble de propulseurs à plasma stationnaire mono-cathode pouvant être incorporés dans un système de propulsion électrique selon l'invention,
- la figure 2 est un schéma-bloc d'un ensemble de circuits de commande et d'alimentation associés à l'ensemble de propulseurs à plasma stationnaire conformément à l'invention,
- la figure 3 est un schéma-bloc d'une partie des circuits de commande et d'alimentation de la figure 2, montrant un branchement électrique croisé des cathodes de l'ensemble de propulseurs à plasma stationnaire mono-cathodes,
- les figures 4 et 5 sont des schémas électrique et fluidique d'un premier exemple de réalisation des circuits de commande de débit d'alimentation en gaz ionisable des propulseurs à plasma stationnaire mono-cathode du système de propulsion électrique selon l'invention,
- les figures 6 et 7 sont des schémas électrique et fluidique d'un deuxième exemple de réalisation des circuits de commande de débit d'alimentation en gaz ionisable des propulseurs à plasma stationnaire mono-cathode du système de propulsion électrique selon l'invention,
- les figures 8 et 9 sont des schémas électrique et fluidique d'un troisième exemple de réalisation des circuits de commande de débit d'alimentation en gaz ionisable des propulseurs à plasma stationnaire mono-cathode du système de propulsion électrique selon l'invention,
- la figure 10 est une vue schématique en coupe d'un exemple de propulseur à plasma stationnaire connu,
- la figure 11 est une une vue de face d'un ensemble de propulseurs à plasma stationnaire bi-cathodes connus pouvant être incorporés dans un système de propulsion électrique, et
- la figure 12 est un schéma-bloc d'un ensemble de circuits de commande et d'alimentation entièrement redondants associés à l'ensemble de propulseurs à plasma stationnaire bi-cathodes connus de la figure 11.

### Description détaillée de modes particuliers de réalisation

L'invention met en oeuvre des propulseurs à effet Hall ou propulseurs à plasma stationnaire (PPS) dont la structure de principe a été décrite plus haut en référence aux figures 10 et 11, mais qui, contrairement à ces propulseurs connus à redondance complète ne comportent chacun qu'une seule cathode.

L'invention est également applicable à des types de propulseurs électriques voisins tels que par exemple des propulseurs à plasma étagé de type coaxial.

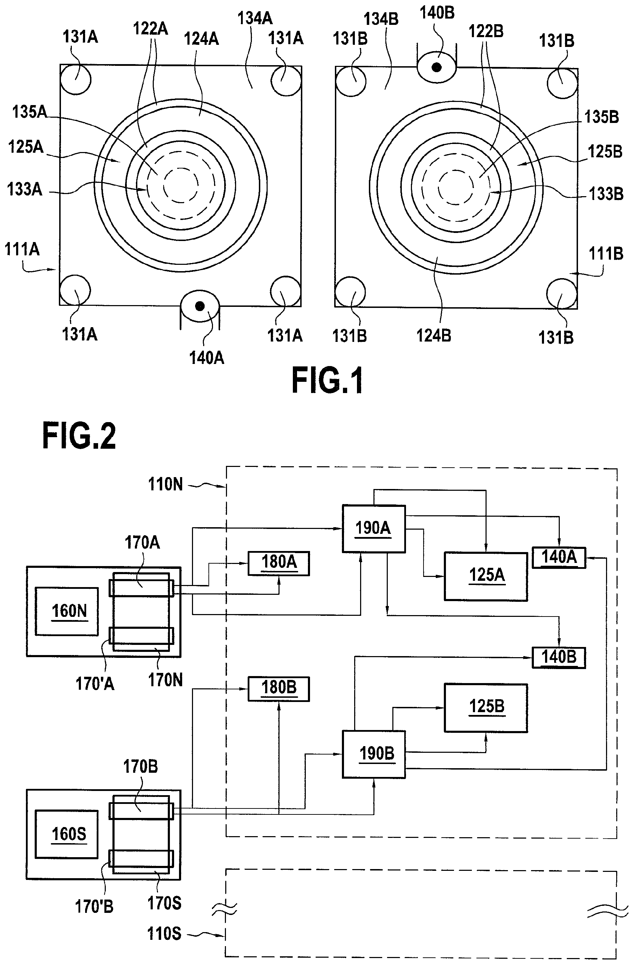

La figure 1 montre en vue de face un ensemble de deux propulseurs à plasma stationnaire mono-cathode juxtaposés 111A, 111B pouvant être incorporés dans un système de propulsion électrique selon l'invention.

Sur la figure 1, on voit pour chaque PPS 111A, 111B un canal annulaire 124A, 124B défini par une pièce 122A, 122B en matériau isolant, telle qu'une céramique diélectrique, un circuit magnétique comprenant des pièces annulaires externe 134A, 134B et interne 135A, 135B, une culasse magnétique étant disposée à l'amont du propulseur et un noyau central reliant les pièces annulaires 134A, 135A respectivement 134B, 135B et la culasse magnétique. Des bobines externes 131A, 131B et interne 133A, 133B permettent de créer un champ magnétique dans le canal annulaire 124A, 124B. A titre de variante, le champ magnétique pourrait toutefois être créé dans le canal annulaire à l'aide d'aimants permanents. Une cathode creuse 140A, 140B est couplée à un dispositif d'alimentation en xénon pour former un nuage de plasma devant la sortie aval du canal 124A, 124B. Une anode 125A, 125B est disposée dans le canal annulaire 124A, 124B et est associée à un distributeur annulaire de gaz ionisable (xénon). Un boîtier peut protéger l'ensemble du propulseur.

La cathode 140A, 140B peut comprendre des éléments de chauffage, d'émission et d'allumage. Les canalisations d'alimentation en gaz sont équipées d'éléments d'isolation électrique. Des câbles électriques relient respectivement les éléments de la cathode 140A, 140B et l'anode 125A, 125B ainsi que les bobines 131A, 131B et 133A, 133B à des circuits électriques d'alimentation et de commande non représentés sur la figure 1.

La figure 2 montre sous forme d'un schéma-bloc l'architecture générale d'un système de propulsion électrique selon l'invention avec ses modules de commande.

Une première unité principale d'alimentation électrique 160N (ou PPU) est associée à un couple de propulseurs à plasma stationnaire 111A, 111B juxtaposés, tels que ceux représentés sur la figure 1, et pouvant servir par exemple pour un contrôle d'orientation nord-sud d'un satellite. L'unité principale d'alimentation électrique 160N est associée à une unité de commutation 170N qui comprend une unité de commutation voie nord 170A et une unité de commutation voie sud 170'A pour permettre une commutation entre un ensemble 110N constituant une voie nord et un ensemble 110S identique constituant une voie sud.

De façon similaire, une deuxième unité principale d'alimentation électrique 160S (ou PPU) est associée à un autre couple de propulseurs à plasma stationnaire juxtaposés, analogues à ceux représentés sur la figure 1, et pouvant servir également par exemple pour un contrôle d'orientation nord-sud d'un satellite. L'unité principale d'alimentation électrique 160S est associée à une unité de commutation 170S qui comprend une unité de commutation voie nord 170B et une unité de commutation voie sud 170'B pour permettre une commutation entre l'ensemble 110N constituant une voie nord et l'ensemble 110S identique constituant une voie sud..

La présence des deux unités principales d'alimentation électrique 160N et 160S permet ainsi d'assurer une redondance dans les circuits de commande.

Dans la suite de la description, on décrira essentiellement les éléments constitutifs d'une première voie, telle que la voie nord 110N, les éléments constitutifs de la deuxième voie sud 110S étant identiques.

Sur la figure 2, on voit que l'unité de commutation voie nord 170A de l'unité de commutation 170N permet de relier la première unité principale d'alimentation 160N à un filtre électrique 190A, et d'alimenter les bobines 131A, 133A de création d'un champ magnétique autour du canal d'ionisation et de décharge 124A du premier PPS 111A ainsi que l'anode 125A et la cathode 140A du premier PPS 111A. Par ailleurs, une liaison, par l'intermédiaire de l'unité de commutation voie nord 170A de l'unité de commutation 170N, entre l'unité principale d'alimentation électrique 160N et le dispositif 180A de commande de débit de gaz du premier PPS 111A permet de commander ce dispositif 180A.

L'unité principale d'alimentation électrique 160N reçoit l'énergie électrique produite par une source extérieure, telle que des panneaux solaires, et convertit cette énergie électrique qui peut être fournie par exemple typiquement sous une tension de 50 V ou de 100V, en une énergie électrique de tension plus élevée, de l'ordre de plusieurs centaines de volts.

L'unité principale d'alimentation électrique 160N comprend notamment des circuits de génération d'un signal de commande analogique qui est appliqué au dispositif 180A de commande de débit de gaz.

L'unité principale d'alimentation électrique 160N reçoit des données fournies par un circuit de commande associé à un module non représenté de régulation de pression du gaz fourni au dispositif 180A de commande de débit de gaz à partir d'un réservoir de gaz non représenté.

Le réservoir de gaz ionisable tel que du xénon est ainsi relié à un module de régulation de pression, lui-même relié au dispositif 180A de commande de débit de gaz servant à alimenter, par des conduites flexibles, respectivement un distributeur de gaz combiné à l'anode 125A au sein du canal de décharge, et la cathode 140A.

Un circuit de commande associé à l'unité principale d'alimentation électrique 160N reçoit des informations de capteurs et de l'état de vannes du module de régulation de pression de gaz et reçoit des données externes. Les données transmises par le circuit de commande à l'unité principale d'alimentation électrique 160N, permettent l'élaboration du signal de commande analogique appliqué au dispositif 180A de commande de débit de gaz.

D'une manière générale, l'unité principale d'alimentation électrique 160N est constituée de circuits électriques permettant d'une part l'alimentation en basse puissance du dispositif 180A de commande de débit de gaz et d'autre part l'alimentation en forte puissance des bobines d'électro-aimant 131A, 133A, de la cathode 140A et de l'anode 125A et de façon sélective, par une liaison croisée, de la cathode 140B du PPS redondant 111B selon une caractéristique importante de la présente invention.

L'unité principale d'alimentation électrique 160S est semblable à l'unité principale d'alimentation électrique 160N. L'unité de commutationvoie nord 170B de l'unité de commutation 170S assure l'alimentation des éléments du PPS redondant 111B, à savoir le dispositif 180B de commande de débit de gaz et les bobines d'alimentation 131B, 133B et par le filtre électrique 190B, l'anode 125B et la cathode 140B, ainsi que de façon sélective, par une liaison croisée, la cathode 140A du PPS nominal 111, ce qui constitue également une caractéristique importante de la présente invention.

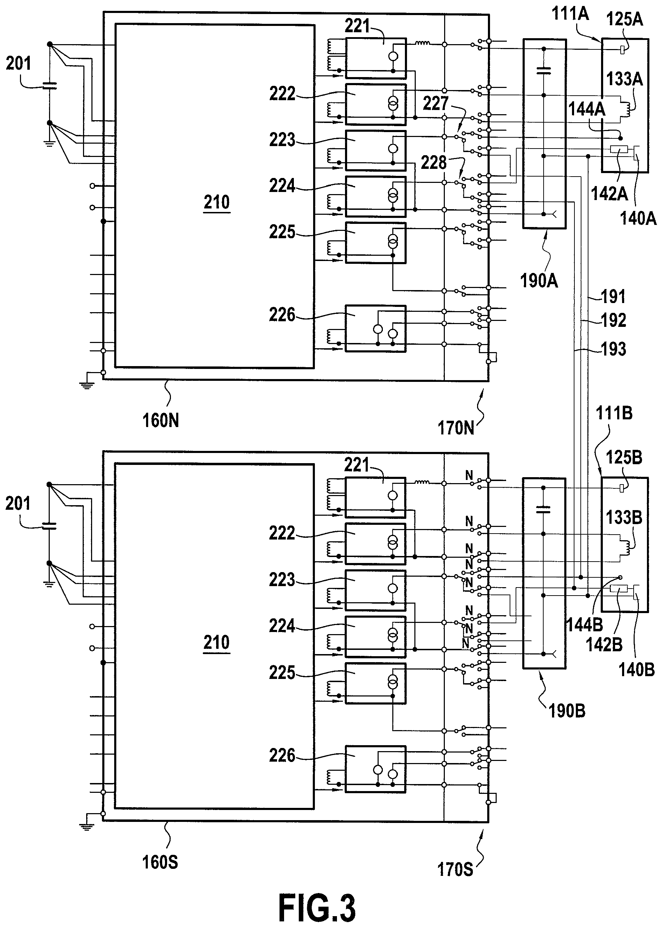

La figure 3 montre de façon plus détaillée un exemple de réalisation des unités principales d'alimentation électrique 160N, 160S avec les unités de commutation 170N, 170S et des filtres électriques 190A, 190B et les lignes de branchement électrique croisé des deux cathodes 140A, 140B permettant l'activation d'une seule des deux cathodes à la fois.

L'unité principale d'alimentation électrique 160N illustrée sur la figure 3 comprend un condensateur d'entrée 201 pour l'application d'une tension d'entrée sur un circuit de conversion 210 pouvant comprendre des onduleurs alimentant les primaires de transformateurs 213A, 213B respectivement. Les secondaires du transformateur 213A sont reliés à un module 221 d'alimentation de l'anode 125A et à un module 222 d'alimentation de la bobine d'électro-aimant 133A. Les secondaires du transformateur 213B sont reliés au module d'alimentation de l'anode 125A, au module 223 d'amorçage de la cathode 140A, et au module 224 de chauffage de la cathode 140A.

La tension d'entrée est en outre appliquée à un convertisseur continu-continu alimentant le primaire d'un transformateur continu-continu 212 dont des secondaires sont reliés à un module 225 de commande d'un élément de thermostriction et à un module 226 de commande d'électrovannes.

Le convertisseur 210 peut encore comprendre un dispositif de séquencement permettant la commande sélective du fonctionnement des modules 221 à 226.

Le convertisseur 210 peut encore comprendre diverses interfaces de télémesure et de télécommande.

D'une façon générale, l'unité principale d'alimentation électrique 160N (et de façon similaire l'unité principale d'alimentation 160S) assure les fonctions d'alimentation de la décharge (tension anode-cathode d'un PPS), d'alimentation des bobines d'électroaimants présentes dans le PPS, d'amorçage et le cas échéant de chauffage de la cathode, ainsi que les fonctions d'alimentation auxiliaire des électrovannes d'alimentation en gaz et des organes de thermostriction.

L'unité principale d'alimentation électrique 160N (ou 160S) incorpore également notamment des fonctions de limitation de courant, de détection de surtension, de temporisation, de détection du seuil de courant de décharge et de régulation du courant de décharge par variation du débit de gaz ionisable (thermostriction). L'invention permet notamment de conserver l'ensemble de ces fonctions tout en assurant un basculement possible du fonctionnement avec l'une ou l'autre des cathodes 140A et 140B des PPS 111A et 111B.

Comme on peut le voir sur la figure 3, la cathode 140A du PPS 111A est reliée de façon permanente à la cathode 140B du PPS 111B par une ligne 191. L'élément de chauffage 142B de la cathode 140B et l'électrode d'amorçage 144B de la cathode 140B sont également reliées par des lignes 193, 192 par l'intermédiaire du commutateur 170N de façon sélective respectivement aux modules de chauffage 224 et d'amorçage 223. Ainsi, dans le cas normal représenté sur la figure 3, le module de chauffage 224 est relié à l'élément de chauffage de la cathode 140A et le module d'amorçage 223 est relié à l'électrode d'amorçage de la cathode 140A, mais en cas de défaillance de la cathode 140A, l'unité de commutation 170N permet un basculement des modules 224 et 223 respectivement vers l'élément de chauffage 142B de la cathode 140B par la ligne 193 et vers l'électrode d'amorçage 144B de la cathode 140B par la ligne 192, permettant ainsi un fonctionnement de la cathode 140B reliée à la cathode 140A. Les électrodes d'amorçage 144A, 144B sont obligatoires tandis que les éléments de chauffage 142A, 142B sont utiles, mais optionnels.

Sur la figure 3, l'unité de commutation 170S est représentée dans la position de fonctionnement normale d'alimentation d'un PPS de la voie sud, non représenté, c'est-à-dire que le PPS 111A normal de la voie nord est alimenté à travers la voie nord de l'unité de commutation 170N et le PPS 111B redondant de la voie nord n'est pas en service, mais est prêt à être mis en service à travers la voie nord de l'unité de commutation 170N, en cas de défaillance du PPS 111A, par simple basculement de premiers commutateurs 227, 228 placés en sortie des modules 223 et 224. Toutefois, en cas de défaillance des circuits de l'unité principale d'alimentation 160N, les circuits de la voie nord de l'unité principale d'alimentation 160S, l'unité de commutation 170S et le filtre électrique 190B peuvent servir à l'alimentation du PPS 111B.

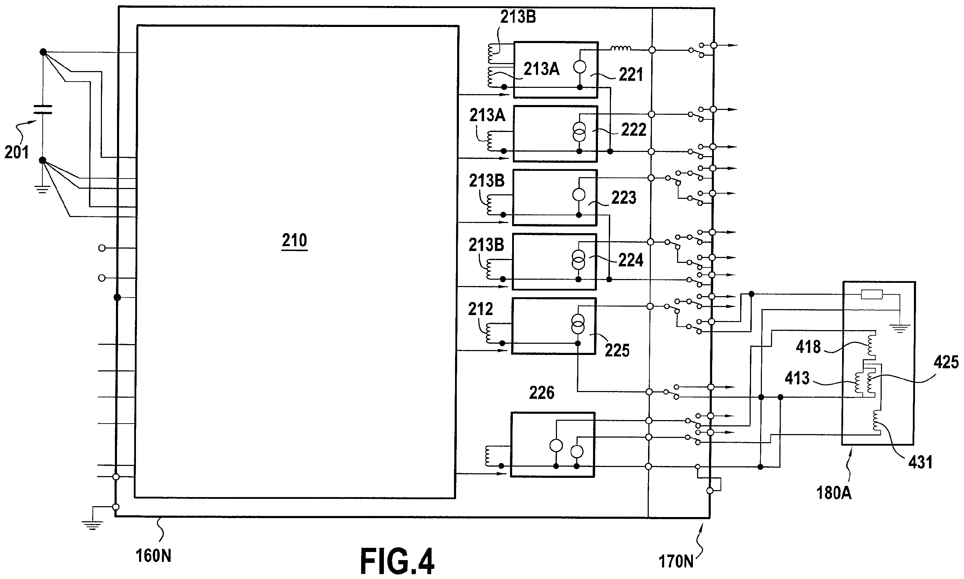

On décrira maintenant en référence aux figures 4 à 9 trois exemples de modes de réalisation possibles de l'architecture fluidique et électrique des dispositifs 180A et 180B de commande de débit de gaz.

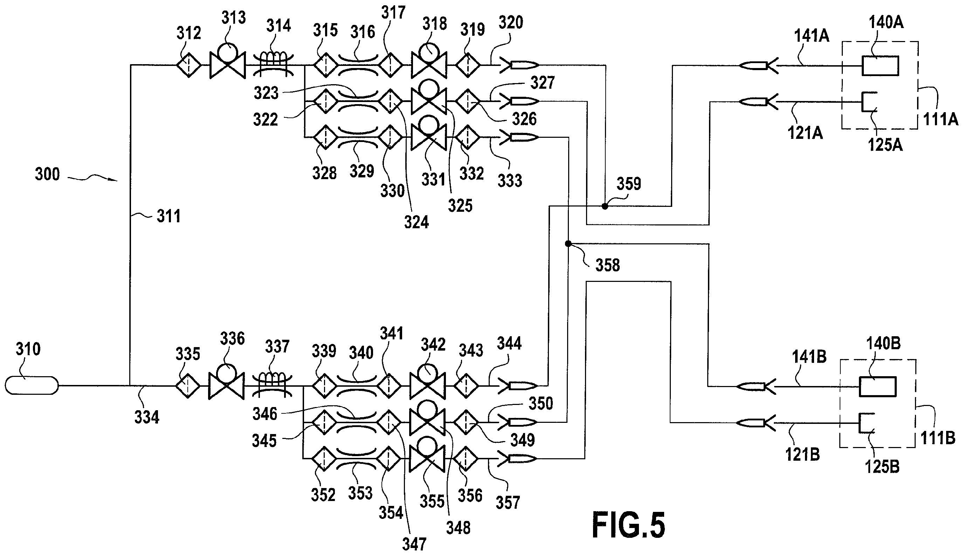

Les figures 4, 6 et 8 représentent la partie électrique des dispositifs 180A et 180B de commande de débit de gaz tandis que les figures 5, 7 et 9 représentent le dispositif fluidique commun 300, 300', 300" de ces dispositifs avec les différents éléments mis en oeuvre entre une sortie 310 d'un dispositif de régulation de gaz relié à un réservoir et les éléments récepteurs de gaz ionisable dans les PPS 111A et 111B, à savoir respectivement un distributeur de gaz associé à une électrode 125A, 125B dans un canal de décharge 124A, 124B et une cathode 140A, 140B.

Dans le mode de réalisation des figures 4 et 5, le dispositif fluidique commun 300 illustré sur la figure 5 comprend une première branche 311 avec une première vanne commandée d'entrée 313, un premier élément de thermostriction 314 et un premier ensemble de trois branches secondaires 320, 327, 333 comprenant chacune une vanne commandée respective 318, 325, 331 et reliées respectivement à la première cathode 140A, à la première anode 125A et à la deuxième cathode 140B par les lignes 141A, 121A et 141B et une deuxième branche 334 avec une deuxième vanne commandée d'entrée 336, un deuxième élément de thermostriction 337 et un deuxième ensemble de trois branches secondaires 344, 350, 357 comprenant chacune une vanne commandée respective 342, 348, 355 et reliées respectivement à la première cathode 140A, à la deuxième cathode 140B et à la deuxième anode 125B par les lignes 141A, 141B et 121B.

Des filtres 312, 315, 317, 319, 322, 324, 326, 328, 330, 332, 335, 339, 341, 343, 345, 347, 349, 352, 354, 356 peuvent être associés aux diverses électrovannes 313, 316, 325, 331, 336, 342, 348 et 355. Des réducteurs de débit 316, 323, 329, 340, 346 et 353 sont de préférence associés aux électrovannes 318, 325, 331, 342, 348 et 355. Des lignes souples peuvent être interposées entre les branches 327 et 357 d'une part et respectivement les lignes 121A et 121B d'autre part. Des lignes souples peuvent également être interposées entre les lignes 320 et 344 d'un part réunies en un point 359 et la ligne 141A d'autre part. Des lignes souples peuvent encore être interposées entre les lignes 333 et 350 d'un part réunies en un point 358 et la ligne 141B d'autre part.

Le premier dispositif de commande de débit de gaz 180A illustré sur la figure 4 comprend des bobines 413, 425, montées en parallèle pour la commande simultanée de la première vanne commandée d'entrée 313 et de la vanne commandée 325 de la branche secondaire 327 reliée à la première anode 125A. Les bobines 418, 431 pour la commande des vannes commandées respectives 318, 331 des branches secondaires 320, 333 sont montées en série avec le montage en parallèle des bobines 413 et 425, l'une ou l'autre des vannes 318, 331 étant ouverte à un instant donné.

Le deuxième dispositif de commande de débit de gaz 180B, non représenté sur la figure 4, mais semblable au dispositif 180A et coopérant avec l'unité principale d'alimentation 160N comprend des bobines montées en parallèle pour la commande simultanée de la deuxième vanne commandée d'entrée 336 et de la vanne commandée 355 de la branche secondaire 357 reliée à la deuxième anode 125B. Des bobines pour la commande des vannes commandées respectives 342, 348 des branches secondaires 344, 350 sont montées en série avec le montage en parallèle précité, l'une ou l'autre des vannes 342, 348 étant ouverte à un instant donné.

Dans le mode de réalisation des figures 4 et 5, les dispositifs de commande de débit de gaz 180A, 180B, qui comportent quatre électrovannes, sont particulièrement faciles à réaliser avec des câblages simplifiés.

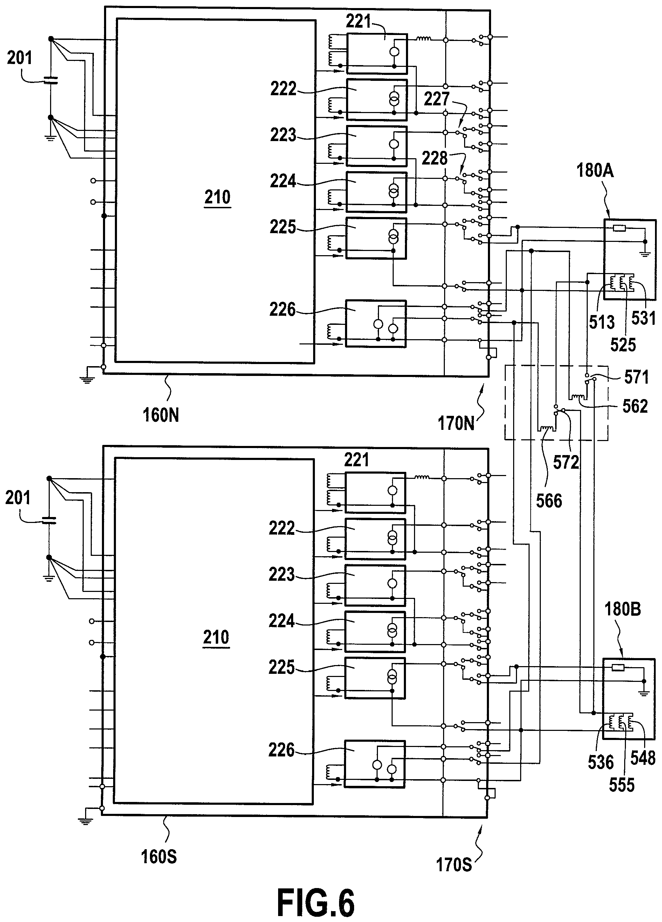

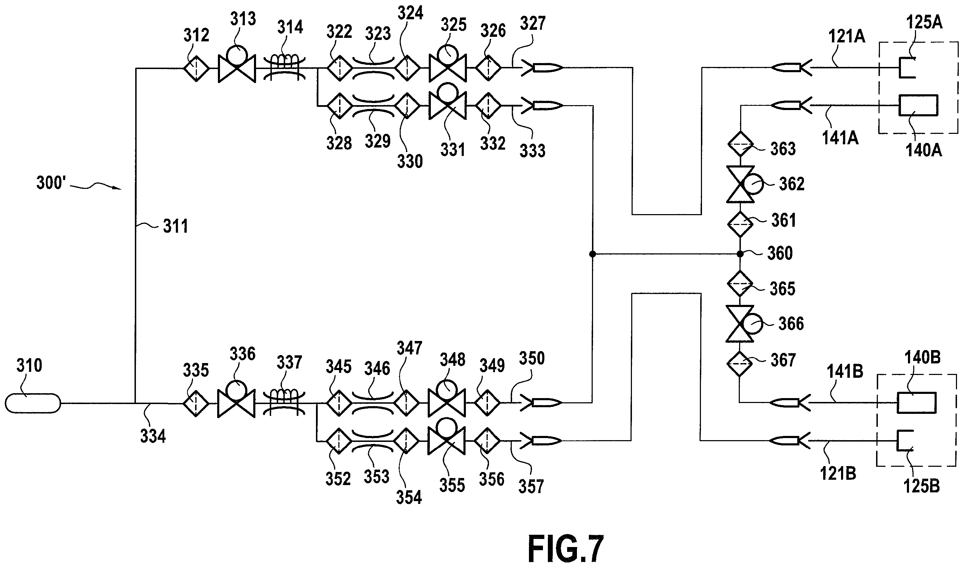

Dans le mode de réalisation des figures 6 et 7, le dispositif fluidique commun 300' comprend une première branche 311 avec une première vanne commandée d'entrée 313, un premier élément de thermostriction 314 et un premier ensemble d'une première et d'une deuxième branches secondaires 327, 333 comprenant chacune une vanne commandée respective 325, 331. La première branche secondaire 327 est reliée par une ligne 121A à la première anode 125A et la deuxième branche secondaire 333 est reliée à un noeud 360, lui-même relié d'une part, par une première vanne commandée supplémentaire 362, à la ligne 141A d'alimentation de la première cathode 140A et d'autre part, par une deuxième vanne commandée supplémentaire 366, à la ligne 141B d'alimentation de la deuxième cathode 140B.

Le dispositif fluidique commun 300' comprend une deuxième branche 334 avec une deuxième vanne commandée d'entrée 336, un deuxième élément de thermostriction 337 et un deuxième ensemble d'une première et d'une deuxième branches secondaires 357, 350 comprenant chacune une vanne commandée respective 355, 348. La première branche secondaire 357 est reliée à la ligne 121B d'alimentation de la deuxième anode 125B et la deuxième branche secondaire 350 est reliée, comme la branche 333, au noeud commun 360, lui-même relié, d'une part, par la première vanne commandée supplémentaire 362, à la ligne 141A d'alimentation de la première cathode 140A et d'autre part, par la deuxième vanne commandée supplémentaire 366, à la ligne 141B d'alimentation de la deuxième cathode 140B.

Comme dans le mode de réalisation des figures 4 et 5, des réducteurs de débit 323, 329, 346, 353 sont avantageusement associés aux électrovannes 325, 331, 348 et 355 respectivement et des filtres 312, 322, 324, 328, 330, 332, 335, 345, 347, 349, 352, 354, 356, 361, 363, 365, 367 sont associés aux diverses électrovannes.

Le premier dispositif de commande de débit de gaz 180A, qui est relié à l'unité principale d'alimentation 160N par l'unité de commutation 170N, comprend des bobines 513, 525, 531 montées en parallèle pour la commande simultanée de la première vanne commandée d'entrée 313, de la vanne commandée 325 de la première branche secondaire 327 de la première branche 311 et de la vanne 331 de la deuxième branche secondaire 333 de la première branche 311.

Le deuxième dispositif de commande de débit de gaz 180B, qui est relié à l'unité principale d'alimentation 160S par l'unité de commutation 170S, comprend des bobines 536, 555, 548 montées en parallèle pour la commande simultanée de la deuxième vanne commandée d'entrée 336, de la vanne commandée 355 de la première branche secondaire 357 de la deuxième branche 334 et de la vanne commandée 348 de la deuxième branche secondaire 350 de la deuxième branche 334..

Les premier et deuxième dispositifs de commande de débit de gaz 180A, 180B comprennent en outre de façon commune des bobines 562, 566 de commande des première et deuxième vannes commandées supplémentaires 362, 366. Un petit nombre de composants tels que des commutateurs ou relais électriques 571, 572 sont associés aux bobines 562, 566 pour assurer la liaison avec l'unité principale d'alimentation 160N. Le mode de réalisation des figures 6 et 7 constitue également une architecture simplifiée par rapport à une redondance complète, dès lors que le boîtier de dérivation comprenant les bobines 562, 566 et les composants 571, 572 peut avoir une configuration simple.

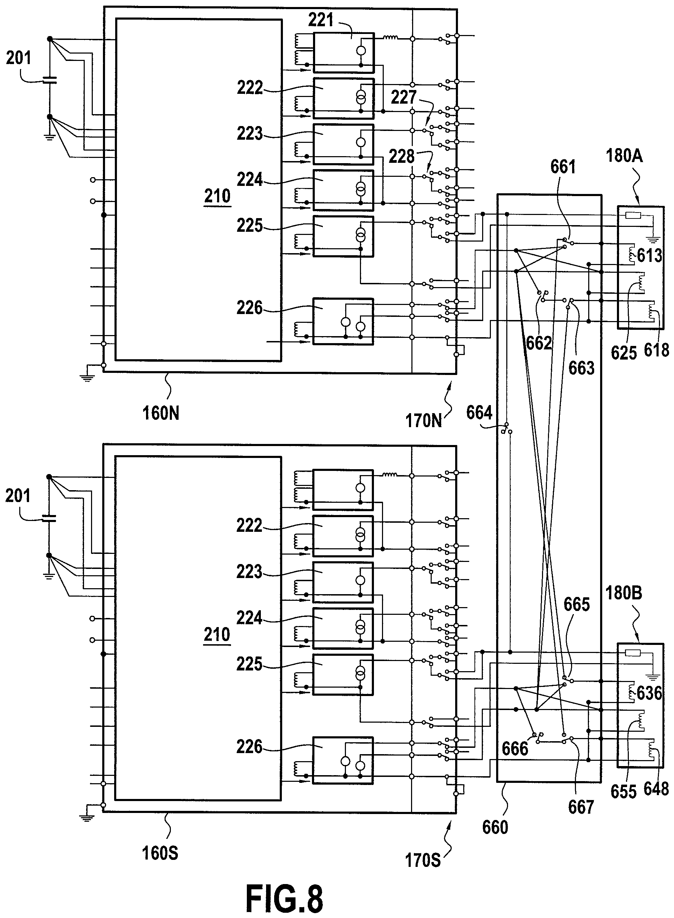

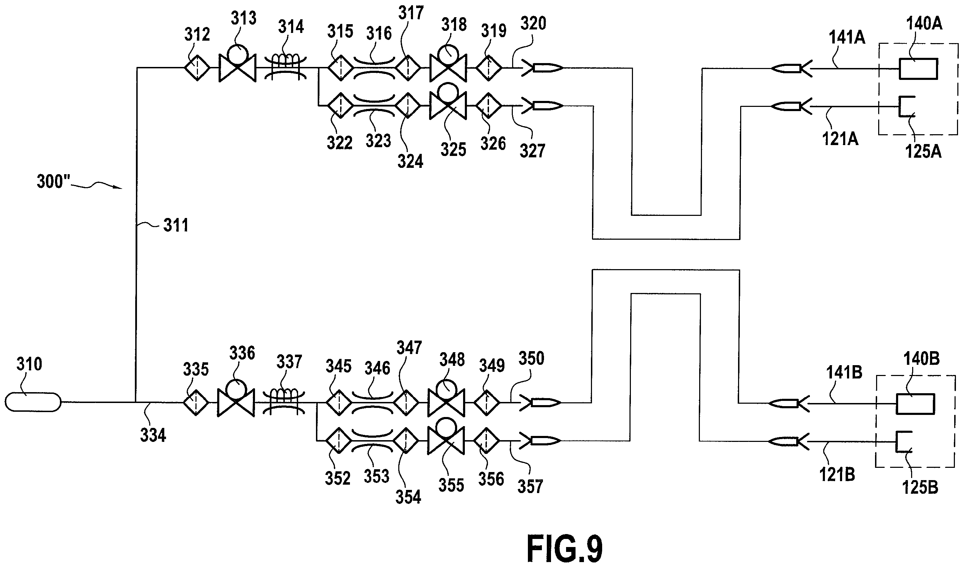

Dans le mode de réalisation des figures 8 et 9, le dispositif fluidique commun 300" comprend une première branche 311 avec une première vanne commandée d'entrée 313, un premier élément de thermostriction 314 et un premier ensemble de deux branches secondaires 320, 327 comprenant chacune une vanne commandée respective 318, 325 et reliées respectivement à la ligne 141A d'alimentation de la première cathode 140A et à la ligne 121A d'alimentation du distributeur de gaz de la première anode 125A. Le dispositif fluidique commun 300" comprend en outre une deuxième branche 334 avec une deuxième vanne commandée d'entrée 336, un deuxième élément de thermostriction 337 et un deuxième ensemble de deux branches secondaires 350, 357 comprenant chacune une vanne commandée respective 348, 355 et reliées respectivement à la ligne 141B d'alimentation de la deuxième cathode 140B et à la ligne 121B d'alimentation de la deuxième anode 125B.

Le premier dispositif de commande de débit de gaz 180A comprend des bobines 613, 625, 618 pour la commande respectivement de la première vanne commandée d'entrée 313 et des vannes commandées respectives 318, 325 du premier ensemble de deux branches secondaires 320, 327.

Le deuxième dispositif de commande de débit de gaz 180B comprend des bobines 636, 648, 655 pour la commande respectivement de la deuxième vanne commandée d'entrée 336 et des vannes commandées respectives 348, 355 du deuxième ensemble de deux branches secondaires 350, 357.

Les premier et deuxième dispositifs de commande de débit de gaz 180A, 180B sont reliés respectivement par les unités de commutation 170N, 170S aux unités principales d'alimentation 160N, 160S. Toutefois, un boîtier de commutation 660 comprenant un petit nombre de composants, tels que des commutateurs ou relais électriques 661 à 667 est interposé entre les unités de commutation 170N, 170S et les premier et deuxième dispositifs de commande de débit de gaz 180A, 180B afin de permettre un fonctionnement en mode croisé, c'est-à-dire avec l'anode d'un PPS et la cathode d'un autre PPS juxtaposé.

Grâce au boîtier de commutation 660, on peut commander séparément les éléments de thermostriction 314, 337 et leurs vannes associées 313, 318, 325 respectivement 336, 348, 355 et on peut ainsi avoir les modes d'alimentation suivants :
a) Alimentation des bobines 613, 625 et 618 commandant l'ouverture des vannes 313, 318 et 325 et commande de la thermostriction 314, soit l'utilisation de la première anode 125A et de la première cathode 140A (liaison à travers les commutateurs 661, 662 et 663).
b) Alimentation des bobines 613, 625, 636 et 648 commandant l'ouverture des vannes 313, 325, 336 et 348 et commande des thermostrictions 314 et 337 alimentées en courant en parallèle, soit l'utilisation de la première anode 125A et de la deuxième cathode 140B (liaisons à travers les commutateurs 664, 665 et 667).
c) Alimentation des bobines 636, 648 et 655 commandant l'ouverture des vannes 336, 348 et 355 et commande de la thermostriction 337, soit l'utilisation de la deuxième anode 125B et de la deuxième cathode 140B (liaisons à travers les commutateurs 665, 666 et 667).
d) Alimentation des bobines 636, 655, 613 et 618 commandant l'ouverture des vannes 336, 355, 313 et 318 et commande des thermostrictions 314 et 337 alimentées en courant en parallèle, soit l'utilisation de la deuxième anode 125B et de la première cathode 140A (liaisons à travers les commutateurs 664, 661, 663 et 665).

La structure du mode de réalisation des figures 8 et 9 est également facile à réaliser et implique un minimum de composants. Dans ce cas, lors d'une mise en oeuvre d'un mode croisé de fonctionnement, il apparaît simplement un fonctionnement de la cathode avec une petite surconsommation de gaz, puisque chaque élément de thermostriction 314, 337 n'est en service qu'avec une seule branche secondaire 320 ou 327 respectivement 350 ou 357.

## Revendications

1. Système de propulsion électrique à propulseurs à plasma stationnaire, comprenant au moins un dispositif (310) de fourniture de gaz sous haute pression régulé ; des première et deuxième unités d'alimentation électrique (160N, 160S) ; des première et deuxième unités de commutation (170A, 170B) ; des premier et deuxième filtres électriques (190A, 190B), et des premier et deuxième propulseurs à plasma stationnaire (111A, 111B) juxtaposés, le premier propulseur à plasma stationnaire comprenant un premier canal d'ionisation (124A), une première cathode unique (140A) disposée au voisinage de la sortie du premier canal d'ionisation (124A), une première anode (125A) associée au premier canal d'ionisation (124A), un premier distributeur de gaz (121A, 141A) et des premiers dispositifs (131A, 133A) de création d'un champ magnétique autour du premier canal d'ionisation (124A) et le deuxième propulseur à plasma stationnaire comprenant un deuxième canal d'ionisation (124B), une deuxième cathode unique (140B) disposée au voisinage de la sortie du deuxième canal d'ionisation (124B), une deuxième anode (125B) associée au deuxième canal d'ionisation (124B), un deuxième distributeur de gaz (121B, 141B) et des deuxièmes dispositifs (131B, 133B) de création d'un champ magnétique autour du deuxième canal d'ionisation (124B) ; le système comprenant en outre un dispositif (191 à 193) de branchement électrique commun des première et deuxième cathodes (140A, 140B) ; des premier et deuxième dispositifs de commande de débit de gaz (180A, 180B) associés respectivement à chacun des premier et deuxième propulseurs à plasma stationnaire (111A, 111B), avec un dispositif fluidique commun (300; 300'; 300") d'alimentation en gaz des première et deuxième anodes (125A, 125B) et des première et deuxième cathodes (140A, 140B) à partir dudit dispositif (310) de fourniture de gaz sous haute pression régulé et un dispositif de commande sélective de l'activation à un instant donné d'une seule desdites première et deuxième cathodes (140A, 140B) en coopération avec l'une desdites première et deuxième anodes (125A, 125B).

2. Système selon la revendication 1, **caractérisé en ce que** le dispositif fluidique commun (300) comprend une première branche (311) avec au moins une première vanne commandée d'entrée (313), un premier élément de thermostriction (314) et un premier ensemble de trois branches secondaires (320, 327, 333) comprenant chacune une vanne commandée respective (318, 325, 331) et reliées respectivement à ladite première cathode (140A), à ladite première anode (125A) et à ladite deuxième cathode (140B) et une deuxième branche (334) avec au moins une deuxième vanne commandée d'entrée (336), un deuxième élément de thermostriction (337) et un deuxième ensemble de trois branches secondaires (344, 350, 357) comprenant chacune une vanne commandée respective (342, 348, 355) et reliées respectivement à ladite première cathode (140A), à ladite deuxième cathode (140B) et à ladite deuxième anode (125B).

3. Système selon la revendication 2, **caractérisé en ce que** le premier dispositif de commande de débit de gaz (180A) comprend des bobines (413, 425, 418, 431) pour la commande de la première vanne commandée d'entrée (313) et des commandes sélectives des vannes commandées respectives (318, 325, 331) du premier ensemble de trois branches secondaires (320, 327, 333) et **en ce que** le deuxième dispositif de commande de débit de gaz (180B) comprend des bobines pour la commande de la deuxième vanne commandée d'entrée (336) et des commandes sélectives des vannes commandées respectives (342, 348, 355) du deuxième ensemble de trois branches secondaires (344, 350, 357).

4. Système selon la revendication 1, **caractérisé en ce que** le dispositif fluidique commun (300') comprend une première branche (311) avec au moins une première vanne commandée d'entrée (313), un premier élément de thermostriction (314) et un premier ensemble d'une première et d'une deuxième branches secondaires (327, 333) comprenant chacune une vanne commandée respective (325, 331), la première branche secondaire (327) étant reliée à ladite première anode (125A) et la deuxième branche secondaire (333) étant reliée d'une part à ladite première cathode (140A) par une première vanne commandée supplémentaire (362) et d'autre part à ladite deuxième cathode (140B) par une deuxième vanne commandée supplémentaire (366) et une deuxième branche (334) avec au moins une deuxième vanne commandée d'entrée (336), un deuxième élément de thermostriction (337) et un deuxième ensemble d'une première et d'une deuxième branches secondaires (357, 350) comprenant chacune une vanne commandée respective (355, 348), la première branche secondaire (357) étant reliée à ladite deuxième anode (125B) et la deuxième branche secondaire (350) étant reliée d'une part à ladite première cathode (140A) par ladite première vanne commandée supplémentaire (362) et d'autre part à ladite deuxième cathode (140B) par ladite deuxième vanne commandée supplémentaire (366).

5. Système selon la revendication 4, **caractérisé en ce que** le premier dispositif de commande de débit de gaz (180A) comprend des bobines (513, 525, 531) montées en parallèle pour la commande simultanée de la première vanne commandée d'entrée (313), de la vanne commandée (325) de la première branche secondaire (327) de la première branche (311) et de la vanne (331) de ladite deuxième branche secondaire (333) de la première branche (311), **en ce que** le deuxième dispositif de commande de débit de gaz (180B) comprend des bobines (536, 555, 548) montées en parallèle pour la commande simultanée de la deuxième vanne commandée d'entrée (336), de la vanne commandée (355) de la première branche secondaire (357) de la deuxième branche (334) et de la vanne commandée (348) de la deuxième branche secondaire (350) de la deuxième branche (334) et **en ce que** les premier et deuxième dispositifs de commande de débit de gaz (180A, 180B) comprennent en outre de façon commune des bobines (562, 566) de commande desdites première et deuxième vannes commandées supplémentaires (362, 366), l'une ou l'autre desdites première et deuxième vannes commandées supplémentaires (362, 366) étant ouverte à un instant donné.

6. Système selon la revendication 1, **caractérisé en ce que** le dispositif fluidique commun (300") comprend une première branche (311) avec au moins une première vanne commandée d'entrée (313), un premier élément de thermostriction (314) et un premier ensemble de deux branches secondaires (320, 327) comprenant chacune une vanne commandée respective (318, 325) et reliées respectivement à ladite première cathode (140A) et à ladite première anode (125A) et une deuxième branche (334) avec au moins une deuxième vanne commandée d'entrée (336), un deuxième élément de thermostriction (337) et un deuxième ensemble de deux branches secondaires (350, 357) comprenant chacune une vanne commandée respective (348, 355) et reliées respectivement à ladite deuxième cathode (140B) et à ladite deuxième anode (125B).

7. Système selon la revendication 6, **caractérisé en ce que** le premier dispositif de commande de débit de gaz (180A) comprend des bobines (613, 625, 618) pour la commande respectivement de la première vanne commandée d'entrée (313) et des vannes commandées respectives (318, 325) du premier ensemble de deux branches secondaires (320, 327), **en ce que** le deuxième dispositif de commande de débit de gaz (180B) comprend des bobines pour la commande respectivement de la deuxième vanne commandée d'entrée (336) et des vannes commandées respectives (348, 355) du deuxième ensemble de deux branches secondaires (350, 357) et **en ce que** les premier et deuxième dispositifs de commande de débit de gaz (180A, 180B) sont associés à un boîtier de commutation (660) pour assurer la commande sélective de l'alimentation desdites bobines.

8. Système selon l'une quelconque des revendications 1 à 7, **caractérisé en ce qu'**au moins un filtre est associé à chaque vanne commandée.

9. Système selon l'une quelconque des revendications 1 à 8, **caractérisé en ce qu'**il comprend en outre des troisième et quatrième propulseurs à plasma stationnaire juxtaposés analogues auxdits premier et deuxième propulseurs à plasma stationnaire juxtaposés et coopérant avec lesdits au moins un dispositif (310) de fourniture de gaz sous haute pression régulé, lesdites première et deuxième unités d'alimentation électrique (160N, 160S), lesdites première et deuxième unités de commutation (170A, 170B) et lesdits premier et deuxième filtres électriques (190A, 190B).

## Patentansprüche

1. Elektrisches Antriebssystem mit stationären Plasma-Antriebsmitteln, umfassend mindestens eine Vorrichtung (310) zur Bereitstellung von geregeltem Hochdruckgas, erste und zweite elektrische Stromversorgungseinheiten (160N, 160S), erste und zweite Schalteinheiten (170A, 170B), erste und zweite elektrische Filter (190A, 190B) und nebeneinander angeordnete erste und zweite stationäre Plasma-Antriebsmittel (111A, 111B), wobei das erste stationäre Plasma-Antriebsmittel einen ersten Ionisationskanal (124A), eine erste Einzelkathode (140A), die in der Nähe des Auslasses des ersten Ionisationskanals (124A) angeordnet ist, eine erste Anode (125A), die dem ersten Ionisationskanal (124A) zugeordnet ist, einen ersten Gasverteiler (121A, 141A) und erste Vorrichtungen (131A, 133A) zur Erzeugung eines Magnetfeldes um den ersten Ionisationskanal (124A) herum umfasst, und das zweite stationäre Plasma-Antriebsmittel einen zweiten Ionisationskanal (124B), eine zweite Einzelkathode (140B), die in der Nähe des Auslasses des zweiten Ionisationskanals (124B) angeordnet ist, eine zweite Anode (125B), die dem zweiten Ionisationskanal (124B) zugeordnet ist, einen zweiten Gasverteiler (121B, 141B) und zweite Vorrichtungen (131B, 133B) zur Erzeugung eines Magnetfeldes um den zweiten Ionisationskanal (124B) herum umfasst,
wobei das System ferner eine Vorrichtung (191 bis 193) für das gemeinsame elektrische Anschließen der ersten und zweiten Kathode (140A, 140B), erste und zweite Vorrichtungen zur Steuerung des Gasflusses (180A, 180B), die jeweils jedem der ersten und zweiten stationären Plasma-Antriebsmittel (111A, 111B) zugeordnet sind, mit einer gemeinsamen fluidischen Vorrichtung (300, 300', 300") für die Gasversorgung der ersten und zweiten Anode (125A, 125B) und der ersten und zweiten Kathode (140A, 140B) von der Vorrichtung (310) zur Bereitstellung von geregeltem Hochdruckgas, und eine Vorrichtung zum selektiven Steuern der Aktivierung einer einzelnen der ersten und zweiten Kathode (140A, 140B) zu einem gegebenen Zeitpunkt im Zusammenwirken mit einer der ersten und zweiten Anoden (125A, 125B) umfasst.

2. System gemäß Anspruch 1, **dadurch gekennzeichnet, dass** die gemeinsame fluidische Vorrichtung (300) eine erste Abzweigung (311) mit mindestens einem ersten eingangsgesteuerten Ventil (313), einem ersten thermostriktiven Element (314) und einem ersten Satz von drei sekundären Abzweigungen (320, 327, 333), die jeweils ein entsprechendes gesteuertes Ventil (318, 325, 331) umfassen und jeweils mit der ersten Kathode (140A), der ersten Anode (125A) und der zweiten Kathode (140B) verbunden sind, und eine zweite Abzweigung (334) mit mindestens einem zweiten eingangsgesteuerten Ventil (336), einem zweiten thermostriktiven Element (337) und einem zweiten Satz von drei sekundären Abzweigungen (344, 350, 357), die jeweils ein entsprechendes gesteuertes Ventil (342, 348, 355) umfassen und jeweils mit der ersten Kathode (140A), der zweiten Kathode (140B) und der zweiten Anode (125B) verbunden sind, umfasst.

3. System gemäß Anspruch 2, **dadurch gekennzeichnet, dass** die erste Vorrichtung zur Steuerung des Gasflusses (180A) Spulen (413, 425, 418, 431) zur Steuerung des ersten eingangsgesteuerten Ventils (313) und selektive Steuerungen der jeweiligen gesteuerten Ventile (318, 325, 331) des ersten Satzes von drei sekundären Abzweigungen (320, 327, 333) umfasst, und dass die zweite Vorrichtung zur Steuerung des Gasstromes (180B) Spulen zur Steuerung des zweiten eingangsgesteuerten Ventils (336) und selektive Steuerungen der jeweiligen gesteuerten Ventile (342, 348, 355) des zweiten Satzes von drei sekundären Abzweigungen (344, 350, 357) umfasst.

4. System gemäß Anspruch 1, **dadurch gekennzeichnet, dass** die gemeinsame fluidische Vorrichtung (300') eine erste Abzweigung (311) mit mindestens einem ersten eingangsgesteuerten Ventil (313), einem ersten thermostriktiven Element (314) und einem ersten Satz aus einer ersten und einer zweiten sekundären Abzweigung (327, 333), die jeweils ein entsprechendes gesteuertes Ventil (325, 331) umfassen, wobei die erste sekundäre Abzweigung (327) mit der ersten Anode (125A) verbunden ist und die zweite sekundäre Abzweigung (333) einerseits mit der ersten Kathode (140A) durch ein erstes zusätzliches gesteuertes Ventil (362) und andererseits mit der zweiten Kathode (140B) durch ein zweites zusätzliches gesteuertes Ventil (366) verbunden ist, und eine zweite Abzweigung (334) mit mindestens einem zweiten eingangsgesteuerten Ventil (336), einem zweiten thermostriktiven Element (337) und einem zweiten Satz aus einer ersten und einer zweiten sekundären Abzweigung (357, 350), die jeweils ein entsprechendes gesteuertes Ventil (355, 348) umfassen, wobei die erste sekundäre Abzweigung (357) mit der zweiten Anode (125B) verbunden ist und die zweite sekundäre Abzweigung (350) einerseits mit der ersten Kathode (140A) durch das erste zusätzliche gesteuerte Ventil (362) und andererseits mit der zweiten Kathode (140B) durch das zweite zusätzliche gesteuerte Ventil (366) verbunden ist, umfasst.

5. System gemäß Anspruch 4, **dadurch gekennzeichnet, dass** die erste Vorrichtung zur Steuerung des Gasflusses (180A) parallel montierte Spulen (513, 525, 531) zur gleichzeitigen Steuerung des ersten eingangsgesteuerten Ventils (313), des gesteuerten Ventils (325) der ersten sekundären Abzweigung (327) der ersten Abzweigung (311) und des Ventils (331) der zweiten sekundären Abzweigung (333) der ersten Abzweigung (311) umfasst, dass die zweite Vorrichtung zur Steuerung des Gasflusses (180B) parallel montierte Spulen (536, 555, 548) zur gleichzeitigen Steuerung des zweiten eingangsgesteuerten Ventils (336), des gesteuerten Ventils (355) der ersten sekundären Abzweigung (357) der zweiten Abzweigung (334) und des gesteuerten Ventils (348) der zweiten sekundären Abzweigung (350) der zweiten Abzweigung (334) umfasst, und dass die erste und zweite Vorrichtung zur Steuerung des Gasflusses (180A, 180B) ferner üblicherweise Spulen (562, 566) zur Steuerung der ersten und zweiten zusätzlichen gesteuerten Ventile (362, 366) umfassen, wobei das eine oder das andere der ersten und zweiten zusätzlichen gesteuerten Ventile (362, 366) zu einem gegebenen Zeitpunkt geöffnet ist.

6. System gemäß Anspruch 1, **dadurch gekennzeichnet, dass** die gemeinsame fluidische Vorrichtung (300") eine erste Abzweigung (311) mit mindestens einem ersten eingangsgesteuerten Ventil (313), einem ersten thermostriktiven Element (314) und einem ersten Satz von zwei sekundären Abzweigungen (320, 327), die jeweils ein entsprechendes gesteuertes Ventil (318, 325) umfassen und jeweils mit der ersten Kathode (140A) und der ersten Anode (125A) verbunden sind, und eine zweite Abzweigung (334) mit mindestens einem zweiten eingangsgesteuerten Ventil (336), einem zweiten thermostriktiven Element (337) und einem zweiten Satz von zwei sekundären Abzweigungen (350, 357), die jeweils ein entsprechendes gesteuertes Ventil (348, 355) umfassen und jeweils mit der zweiten Kathode (140B) und der zweiten Anode (125B) verbunden sind, umfasst.

7. System gemäß Anspruch 6, **dadurch gekennzeichnet, dass** die erste Vorrichtung zur Steuerung des Gasflusses (180A) Spulen (613, 625, 618) zur jeweiligen Steuerung des ersten eingangsgesteuerten Ventils (313) und der jeweiligen gesteuerten Ventile (318, 325) des ersten Satzes von zwei sekundären Abzweigungen (320, 327) umfasst, dass die zweite Vorrichtung zur Steuerung des Gasflusses (180B) Spulen zur jeweiligen Steuerung des zweiten eingangsgesteuerten Ventils (336) und der jeweiligen gesteuerten Ventile (348, 355) des zweiten Satzes von zwei sekundären Abzweigungen (350, 357) umfasst, und dass die erste und zweite Vorrichtung zur Steuerung des Gasflusses (180A, 180B) einem Schaltkasten (660) zugeordnet sind, um die selektive Steuerung der Versorgung der Spulen zu gewährleisten.

8. System gemäß einem der Ansprüche 1 bis 7, **dadurch gekennzeichnet, dass** jedem gesteuerten Ventil mindestens ein Filter zugeordnet ist.

9. System gemäß einem der Ansprüche 1 bis 8, **dadurch gekennzeichnet, dass** es ferner nebeneinander angeordnete dritte und vierte stationäre Plasma-Antriebsmittel, die analog zu den nebeneinander angeordneten ersten und zweiten stationären Plasma-Antriebsmitteln sind und mit der mindestens einen Vorrichtung (310) zur Bereitstellung von geregeltem Hochdruckgas zusammenwirken, die erste und zweite Stromversorgungseinheit (160N, 160S), die erste und zweite Schalteinheit (170A, 170B) und das erste und zweite elektrische Filter (190A, 190B) umfasst.

## Claims

1. An electric propulsion system with stationary plasma thrusters, the system comprising at least one device (310) for regulated delivery of gas under high pressure; first and second power processor units (PPUs) (160N, 160S); first and second external thruster switch units (ETSUs) (170A, 170B); first and second electrical filters (190A, 190B); and first and second juxtaposed stationary plasma thrusters (111A, 111B); the first stationary plasma thruster comprising a first ionization channel (124A), a single first cathode (140A) arranged in the vicinity of the outlet from the first ionization channel (124A), a first anode (125A) associated with the first ionization channel (124A), a first gas manifold (121A, 141A), and first devices (131A, 133A) for creating a magnetic field around the first ionization channel (124A), and the second stationary plasma thruster comprising a second ionization channel (129B), a second single cathode (140B) arranged in the vicinity of the outlet from the second ionization channel (124B), a second anode (125B) associated with the second ionization channel (124B), a second gas manifold (121B, 141B), and second devices (131B, 133B) for creating a magnetic field around the second ionization channel (124B); the electric propulsion system further comprises an electrical connection device (191 to 193) common to the first and second cathodes (140A, 140B); first and second gas flow rate control devices (180A, 180B) associated respectively with each of the first and second stationary plasma thrusters (111A, 111B), with a common fluid flow device (300; 300'; 300") for feeding gas to the first and second anodes (125A, 125B) and to the first and second cathodes (140A, 140B) from said device (310) for regulated delivery of gas under high pressure; and a device for selectively controlling the activation at any given instant of only one of said first and second cathodes (140A, 140B) in co-operation with one of said first and second anodes (125A, 125B).

2. A system according to claim 1, **characterized in that** the common fluid flow device (300) comprises a first branch (311) having at least: a first controlled inlet valve (313); a first thermostriction element (314); and a first set of three secondary branches (320, 327, 333), each having a respective controlled valve (318, 325, 331) and connected respectively to said first cathode (140A), to said first anode (125A), and to said second cathode (140B); and a second branch (334) having at least: a second controlled inlet valve (336); a second thermostriction element (337); and a second set of three secondary branches (344, 350, 357), each having a respective controlled valve (342, 348, 355), and connected respectively to said first cathode (140A), to said second cathode (140B), and to said second anode (125B).

3. A system according to claim 2, **characterized in that** the first gas flow rate control device (180A) has coils (413, 425, 418, 431) for controlling the first controlled inlet valve (313), and selective controls for controlling respective controlled valves (318, 325, 331) of the first set of three secondary branches (320, 327, 333), and **in that** the second gas flow rate control device (180B) has coils for controlling the second controlled inlet valve (336), and selective controls for controlling the respective controlled valves (342, 348, 355) of the second set of three secondary branches (344, 350, 357).

4. A system according to claim 1, **characterized in that** the common fluid flow device (300') comprises a first branch (311) with at least: a first controlled inlet valve (313); a first thermostriction element (314); and a first set of first and second secondary branches (327, 333), each having a respective controlled valve (325, 331), the first secondary branch (327) being connected to said first anode (125A) and the second secondary branch (333) being connected firstly to said first cathode (140A) via a first additional controlled valve (362) and secondly to said second cathode (140B) via a second additional controlled valve (366); and a second branch (334) with at least: a second controlled inlet valve (336); a second thermostriction element (337); and a second set of first and second secondary branches (357, 350), each having a respective controlled valve (355, 348), the first secondary branch (357) being connected to said second anode (125B), and the second secondary branch (350) being connected firstly to said first cathode (140A) via said first additional controlled valve (362) and secondly to said second cathode (140B) via said second additional controlled valve (366).

5. A system according to claim 4, **characterized in that** the first gas flow rate control device (180A) has coils (513, 525, 531) connected in parallel for simultaneously controlling the first controlled inlet valve (313), the controlled valve (325) of the first secondary branch (327) of the first branch (311), and the valve (331) of said second secondary branch (333) of the first branch (311), **in that** the second gas flow rate control device (180B) has coils (536, 555, 548) connected in parallel for simultaneously controlling the second controlled inlet valve (336), the controlled valve (355) of the first secondary branch (357) of the second branch (334), and the controlled valve (348) of the second secondary branch (350) of the second branch (334), and **in that** the first and second gas flow rate control devices (180A, 180B) also have in common control coils (562, 566) for controlling said first and second additional controlled valves (362, 366), one or the other of said first and second additional controlled valves (362, 366) being open at any given instant.

6. A system according to claim 1, **characterized in that** the common fluid flow device (300") comprises a first branch (311) with at least: a first controlled inlet valve (313); a first thermostriction element (314); and a first set of two secondary branches (320, 327), each having a respective controlled valve (318, 325) and connected respectively to said first cathode (140A) and to said first anode (125A); and a second branch (334) with at least: a second controlled inlet valve (336); a second thermostriction element (337); and a second set of two secondary branches (350, 357), each having a respective controlled valve (348, 355) and connected respectively to said second cathode (140B) and to said second anode (125B).

7. A system according to claim 6, **characterized in that** the first gas flow rate control device (180A) has coils (613, 625, 618) for respectively controlling the first controlled inlet valve (313) and the respective controlled valves (318, 325) of the first set of two secondary branches (320, 327), **in that** the second gas flow rate control device (180B) has coils for respectively controlling the second controlled inlet valve (336) and the respective controlled valves (348, 355) of the second set of two secondary branches (350, 357), and **in that** the first and second gas flow rate control devices (180A, 180B) are associated with a switch module (660) for selectively controlling the power supply to said coils.

8. A system according to any one of claims 1 to 7, **characterized in that** at least one filter is associated with each controlled valve.

9. A system according to any one of claims 1 to 8, **characterized in that** it further comprises third and fourth juxtaposed stationary plasma thrusters analogous to said first and second juxtaposed stationary plasma thrusters and co-operating with said at least one device (310) for regulated delivery of gas under high pressure, said first and second PPUs (160N, 160S), said first and second switch units (170A, 170B), and said first and second electrical filters (190A, 190B).
